(19) **Europäisches Patentamt / European Patent Office / Office européen des brevets**

(11) **EP 2 695 274 B1**

(12) **FASCICULE DE BREVET EUROPEEN**

(45) Date de publication et mention de la délivrance du brevet:
**29.06.2016 Bulletin 2016/26**

(21) Numéro de dépôt: **12711913.9**

(22) Date de dépôt: **05.04.2012**

(51) Int Cl.:
*H02J 3/38* (2006.01)     *H02P 9/00* (2006.01)
*H02H 7/06* (2006.01)     *F03D 9/00* (2016.01)

(86) Numéro de dépôt international:
**PCT/EP2012/056359**

(87) Numéro de publication internationale:
**WO 2012/136809 (11.10.2012 Gazette 2012/41)**

(54) **CHAINE D'ENTRAINEMENT COMPRENANT UNE MACHINE ÉLECTRIQUE DOUBLEMENT ALIMENTÉE ET UN FILTRE COUPE-BANDE CONNECTÉ ENTRE UN CONVERTISSEUR CONTINU-ALTERNATIF ET LE ROTOR DE LA MACHINE**

ANTRIEBSKETTE MIT EINER DOPPELTGESPEISTEN ELEKTRISCHEN MASCHINE UND EINEM ANGESCHLOSSENEN BANDSPERRFILTER ZWISCHEN EINEM WECHSELRICHTER UND DEM ROTOR DER MASCHINE

DRIVE CHAIN COMPRISING A DOUBLY-FED ELECTRIC MACHINE AND A BAND-STOP FILTER CONNECTED BETWEEN AN INVERTER AND THE ROTOR OF THE MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2011 FR 1152940**

(43) Date de publication de la demande:
**12.02.2014 Bulletin 2014/07**

(73) Titulaire: **GE Energy Power Conversion Technology Limited**
**Rugby**
**Warwickshire CV21 1BU (GB)**

(72) Inventeur: **PERMUY, Alfred**
**F-92500 Rueil Malmaison (FR)**

(74) Mandataire: **Serjeants LLP**
**Dock**
**75 Exploration Drive**
**Leicester, LE4 5NU (GB)**

(56) Documents cités:
**US-A1- 2007 177 314     US-A1- 2010 117 605**

- **JUN YAO ET AL: "An Improved Control Strategy of Limiting the DC-Link Voltage Fluctuation for a Doubly Fed Induction Wind Generator", IEEE TRANSACTIONS ON POWER ELECTRONICS, IEEE SERVICE CENTER, PISCATAWAY, NJ, US, vol. 23, no. 3, 1 mai 2008 (2008-05-01), pages 1205-1213, XP011208130, ISSN: 0885-8993**

EP 2 695 274 B1

**Description**

La présente invention concerne une chaîne d'entraînement propre à être reliée à un réseau électrique alternatif et comprenant:

- une machine électrique comportant un stator et un rotor, le stator étant propre à être relié électriquement au réseau alternatif et présentant une fréquence statorique,
- un système bidirectionnel de conversion d'un courant électrique alternatif en un autre courant électrique alternatif, propre à être connecté entre le réseau alternatif et le rotor de la machine électrique, le système bidirectionnel de conversion comportant :

  + un convertisseur bidirectionnel de courant alternatif en courant continu propre à être connecté au réseau alternatif,
  + un convertisseur bidirectionnel de courant continu en courant alternatif connecté entre le convertisseur alternatif-continu et le rotor, le convertisseur continu-alternatif comportant des interrupteurs électroniques commandables propres à convertir une tension continue en une tension alternative , le convertisseur continu-alternatif et le rotor étant, pour chaque phase de la tension alternative, reliés entre eux en un point intermédiaire, et,
  + un dispositif de commande des interrupteurs du convertisseur continu-alternatif suivant une loi de commande.

L'invention concerne également une installation de génération d'énergie électrique à destination d'un réseau électrique alternatif, l'installation comprenant une turbine et une telle chaîne d'entraînement connectée à la turbine, d'une part, et propre à être reliée au réseau alternatif, d'autre part. L'invention s'applique notamment à une éolienne, ou à une installation hydroélectrique.

On connaît du document « Grid connection of doubly fed induction generator wind turbines : a survey", de Martinez de Alegria et al. ou alternativement de la demande de brevet américain US 2007/0177314 A, une chaîne d'entraînement du type précité. La chaîne d'entraînement est reliée à un réseau triphasé et comprend une machine électrique doublement alimentée, le stator de la machine étant connecté au réseau triphasé et le rotor étant alimenté par l'intermédiaire d'un convertisseur triphasé-triphasé connecté au réseau triphasé. Le convertisseur comporte un convertisseur alternatif-continu connecté au réseau triphasé et un convertisseur continu-alternatif connecté entre le convertisseur alternatif-continu et le rotor de la machine. Lorsqu'un défaut, tel qu'un court-circuit se produit sur le réseau triphasé, la chaîne d'entraînement est tenue de respecter certaines règles imposées par le réseau électrique (de l'anglais grid code), comme par exemple le réseau électrique allemand, ou encore le réseau électrique anglais, afin de permettre au réseau de maîtriser ce défaut (de l'anglais Fault Ride Through - FRT).

Un tel court-circuit sur le réseau électrique entraîne une augmentation importante de la tension induite au rotor de la machine électrique. Le document précité envisage alors différentes solutions pour éviter une détérioration de la chaîne d'entraînement, et en particulier du convertisseur, suite à cette augmentation de la tension induite tout en respectant les règles du réseau électrique concerné. De multiples solutions sont envisagées, telles que l'ajout d'un dispositif de protection contre les surtensions et/ou les surintensités connecté entre les bornes de sortie du convertisseur continu-alternatif du côté alternatif, ou encore l'ajout de thyristors connectés en anti-parallèle entre le réseau électrique et le stator de la machine pour chaque phase du courant alternatif. Une solution préférentielle est l'ajout du dispositif de protection contre les surtensions et/ou les surintensités en combinaison avec un contrôle du flux rotorique via une commande particulière du convertisseur connecté entre le rotor et le réseau.

Toutefois, ces différentes solutions nécessitent d'adjoindre à la machine électrique doublement alimentée un dispositif additionnel actif de protection, tel qu'un dispositif de protection contre les surtensions et/ou les surintensités ou des thyristors connectés en anti-parallèle entre le réseau électrique et le stator de la machine, un tel dispositif étant coûteux.

Le but de l'invention est de proposer une chaîne d'entraînement destinée à être reliée à un réseau électrique alternatif et respectant les règles de ce réseau en cas de défaut sur le réseau, tel qu'un court-circuit, tout en ne nécessitant pas un tel dispositif additionnel actif de protection.

A cet effet, l'invention a pour objet une chaîne d'entraînement du type précité, caractérisée en ce qu'elle comprend en outre un filtre coupe-bande pour un intervalle cible compris entre 0,6 fois la fréquence statorique et 1,4 fois la fréquence statorique, le filtre coupe-bande étant connecté entre les points intermédiaires, et propre à atténuer la tension au point intermédiaire pour les fréquences de l'intervalle cible.

Suivant d'autres modes de réalisation, la chaîne d'entraînement comprend une ou plusieurs des caractéristiques suivantes, prises isolément ou suivant toutes les combinaisons techniquement possibles :

- l'intervalle cible est compris entre 0,7 fois la fréquence statorique et 1,3 fois la fréquence statorique, de préférence compris entre 0,9 fois la fréquence statorique et 1,1 fois la fréquence statorique, de préférence encore compris entre 0,95 fois la fréquence statorique et 1,05 fois la fréquence statorique ;

- le filtre coupe-bande est un filtre passif ;
- le filtre coupe-bande comprend une pluralité de branches, chaque branche comportant une bobine électromagnétique et un condensateur connectés en série ;
- chaque branche comporte en outre une résistance connectée en parallèle de chaque bobine électromagnétique ;
- la loi de commande est telle que la tension alternative issue du convertisseur continu-alternatif est, pour les fréquences de l'intervalle cible, asservie à une tension d'amplitude sensiblement égale à celle de la tension atténuée au point intermédiaire et sensiblement en phase avec la tension issue du rotor ;
- la chaîne d'entraînement comprend en outre un premier capteur de mesure de la tension continue entre le convertisseur alternatif-continu et le convertisseur continu-alternatif, un deuxième capteur de mesure de la tension alternative atténuée au point intermédiaire, et le dispositif de commande comprend des moyens d'asservissement, pour les fréquences de l'intervalle cible, de la tension alternative issue du convertisseur continu-alternatif ;
- le convertisseur continu-alternatif est connecté directement au convertisseur alternatif-continu via un bus de circulation du courant continu, en l'absence d'un hacheur de freinage connecté au bus de circulation du courant continu ; et
- le convertisseur continu-alternatif est connecté directement entre le convertisseur alternatif-continu et le rotor, en l'absence d'un dispositif de protection conte les surtensions et/ou les surintensités connecté entre les points intermédiaires.

L'invention a également pour objet une installation de génération d'énergie électrique à destination d'un réseau électrique alternatif, l'installation comprenant une turbine et une chaîne d'entraînement connectée à la turbine, d'une part, et propre à être reliée au réseau alternatif, d'autre part, caractérisée en ce que la chaîne d'entraînement est telle que définie ci-dessus, la machine électrique étant un générateur connecté à la turbine, et le stator du générateur étant propre à être connecté au réseau alternatif.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'une installation de génération d'énergie électrique comprenant une chaîne d'entraînement propre à être reliée à un réseau électrique alternatif, et
- la figure 2 est une représentation schématique d'un dispositif de commande d'interrupteurs d'un convertisseur continu-alternatif de la chaîne d'entraînement de la figure 1 selon un deuxième mode de réalisation.

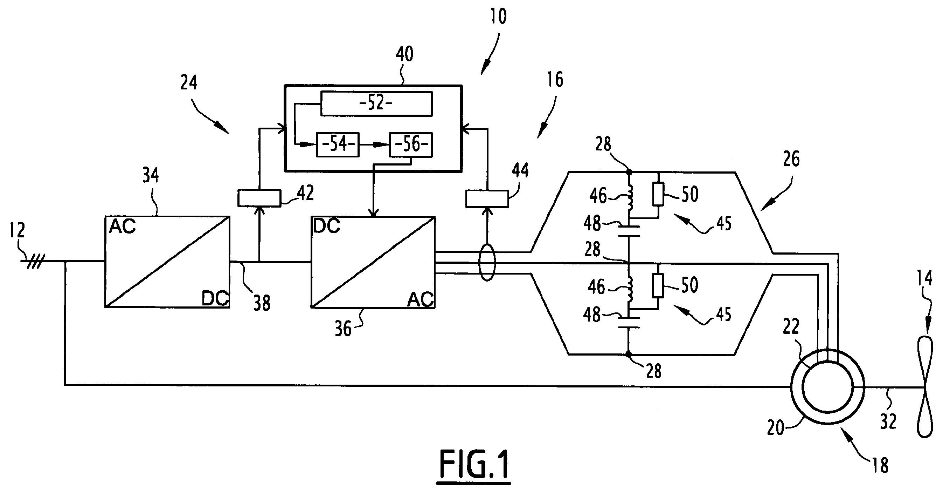

Sur la figure 1, une installation 10 de génération d'énergie électrique à destination d'un réseau électrique alternatif 12 comprend une turbine 14 et une chaîne d'entraînement 16 connectée à la turbine, d'une part, et reliée au réseau alternatif, d'autre part.

L'installation de génération d'énergie électrique 10 est, par exemple, une éolienne.

En variante, l'installation de génération d'énergie électrique est une installation hydroélectrique.

Le réseau électrique alternatif 12 est, par exemple, un réseau triphasé de fréquence sensiblement égale à 50 Hz. En variante, la fréquence du réseau alternatif est sensiblement égale à 60 Hz.

Le réseau électrique 12 présente, par exemple, une tension de l'ordre de 1 kV dans le cas d'une éolienne. En variante, le réseau électrique présente une tension de l'ordre de 33 kV dans le cas d'une installation hydroélectrique.

Le réseau alternatif 12 est généralement relié à un réseau haute tension par l'intermédiaire d'un transformateur de tension, non représenté. Le réseau haute tension présente, par exemple, une tension de l'ordre de 33 kV dans le cas d'une éolienne. En variante, le réseau haute tension présente une tension de l'ordre de 100 kV dans le cas d'une installation hydroélectrique.

Chaque équipement électrique connecté au réseau alternatif 12 doit vérifier des règles de comportement en présence d'un défaut sur le réseau 12, tel qu'un court-circuit, afin de ne pas provoquer de défauts en cascade sur le réseau 12. Les règles du réseau électrique allemand exigent, à titre d'exemple, que l'équipement électrique soit en mesure de surmonter un défaut sur le réseau (de l'anglais Fault Ride Through - FRT) correspondant à une chute de tension à 15% de la tension nominale pendant une durée de 300 ms avec un retour à 80% de la tension nominale après une durée de 3 secondes. Les règles des autres réseaux électriques sont similaires à celles du réseau allemand.

La chaîne d'entraînement 16 comprend une machine électrique 18 comportant un stator 20 et un rotor 22, et un système bidirectionnel 24 de conversion d'un courant électrique alternatif en un autre courant alternatif, connecté entre le réseau alternatif 12 et le rotor 22 de la machine électrique.

La chaîne d'entraînement 16 comprend en outre un filtre coupe-bande 26 connecté, en étoile ou en triangle, entre des points intermédiaires 28 de connexion du système de conversion au rotor pour chaque phase du courant alternatif.

La machine électrique 18 est une machine asynchrone. Dans l'exemple de réalisation de la figure 1, la machine électrique 18 est un générateur connecté à la turbine 14.

Le stator 20 est relié électriquement au réseau alternatif 12. Le stator 20 présente un courant statorique de vitesse angulaire $\omega_{stator}$ et de fréquence $f_{stator}$, la vitesse angulaire $\omega_{stator}$ étant égale à $2\pi$ x $f_{stator}$. La fréquence du courant statorique, également appelée fréquence statorique $f_{stator}$, est égale à la fréquence du courant alternatif du réseau 12. Le stator 20 est, par exemple, connecté directement au réseau alternatif 12.

Le rotor 22 est relié électriquement au système de conversion 24. Le rotor 22 comporte un arbre 32 mécaniquement solidaire d'un arbre de la turbine 14. L'arbre 32 du rotor présente une vitesse angulaire $\omega$ et une fréquence de rotation mécanique $f_{meca}$, la vitesse angulaire $\omega$ étant égale à $2\pi \times f_{meca}$. Un courant rotorique de pulsation $\omega_{rotor}$ et de fréquence $f_{rotor}$ est propre à circuler dans le rotor 22, la pulsation rotorique étant égale à $2\pi \times f_{rotor}$. Le rotor 22 présente P paires de pôles magnétiques.

La relation d'autopilotage de la machine asynchrone 18 vérifie alors l'équation suivante :

$$P \text{ x } \omega = \omega_{stator} - \omega_{rotor} \qquad\qquad (1)$$

Autrement dit, la fréquence statorique $f_{stator}$ et la fréquence du courant rotorique, également appelée fréquence rotorique $f_{rotor}$, vérifient l'équation suivante :

$$P \text{ x } f_{meca} = f_{stator} - f_{rotor} \qquad\qquad (2)$$

Par convention, la fréquence rotorique $f_{rotor}$ est positive lorsque le flux de puissance à travers le système de conversion 24 est dirigé du réseau alternatif 12 vers la machine électrique 18, et est négative lorsque le flux de puissance à travers le système de conversion 24 est dirigé de la machine électrique 18 vers le réseau alternatif 12, le système de conversion 24 étant bidirectionnel. Lorsque la fréquence rotorique $f_{rotor}$ est nulle, aucun flux de puissance ne traverse le système de conversion 24, le stator 20 étant directement alimenté via le réseau alternatif 12 et la fréquence de rotation mécanique $f_{meca}$ étant égale à la fréquence statorique $f_{stator}$.

Dans le cas d'une éolienne, la valeur de la fréquence de rotation mécanique $f_{meca}$ multipliée par le nombre P de paires de pôles magnétiques est comprise entre 60% et 140% de la valeur de la fréquence statorique $f_{stator}$, de préférence comprise entre 70% et 130% de la valeur de la fréquence statorique $f_{stator}$. Autrement dit, la valeur de la fréquence rotorique $f_{rotor}$ est comprise entre -40% et 40% de la valeur de la fréquence statorique $f_{stator}$, de préférence comprise entre -30% et 30% de la valeur de la fréquence statorique $f_{stator}$.

Dans le cas d'une installation hydroélectrique, la valeur de la fréquence de rotation mécanique $f_{meca}$ multipliée par le nombre P de paires de pôles magnétiques est comprise entre 90% et 110% de la valeur de la fréquence statorique $f_{stator}$, de préférence comprise entre 95% et 105% de la valeur de la fréquence statorique $f_{stator}$. Autrement dit, la valeur de la fréquence rotorique $f_{rotor}$ est comprise entre -10% et 10% de la valeur de la fréquence statorique $f_{stator}$, de préférence comprise entre -5% et 5% de la valeur de la fréquence statorique $f_{stator}$.

Dans l'exemple de réalisation de la figure 1, la fréquence statorique $f_{stator}$ est égale 50 Hz, la fréquence de rotation mécanique $f_{meca}$ est de l'ordre de 48/P Hz, de sorte que la fréquence rotorique $f_{rotor}$ est de l'ordre de 2 Hz.

Le système de conversion 24 comporte un convertisseur bidirectionnel de courant alternatif en courant continu 34, également appelé convertisseur alternatif-continu, connecté au réseau alternatif, un convertisseur bidirectionnel de courant continu en courant alternatif 36, également appelé convertisseur continu-alternatif, connecté entre le convertisseur alternatif-continu et le rotor. Le convertisseur continu-alternatif 36 comporte des interrupteurs électroniques commandables propres à convertir une tension continue d'entrée en une tension alternative de sortie.

L'homme du métier comprendra que le convertisseur bidirectionnel alternatif-continu 28 fonctionne en redresseur de tension et que le convertisseur bidirectionnel continu-alternatif 30 fonctionne en onduleur de tension, lorsque le flux de puissance à travers le système de conversion 24 est dirigé du réseau alternatif 12 vers la machine électrique 18, c'est-à-dire lorsque la fréquence rotorique $f_{rotor}$ est positive.

Inversement, l'homme du métier comprendra que le convertisseur bidirectionnel continu-alternatif 30 fonctionne en redresseur de tension et que le convertisseur bidirectionnel alternatif-continu 28 fonctionne en onduleur de tension, lorsque le flux de puissance à travers le système de conversion 24 est dirigé de la machine électrique 18 vers le réseau alternatif 12, c'est-à-dire lorsque la fréquence rotorique $f_{rotor}$ est négative.

Le système de conversion 24 comporte également un bus 38 de circulation d'un courant continu disposé entre le convertisseur alternatif-continu et le convertisseur continu-alternatif, et un dispositif 40 de commande des interrupteurs du convertisseur continu-alternatif suivant une loi de commande. Le convertisseur continu-alternatif 36 et le rotor 22 sont, pour chaque phase de la tension alternative propre à être échangée par le convertisseur continu-alternatif avec le rotor, reliés entre eux en un point intermédiaire 28 respectif.

La chaîne d'entraînement 16 comprend en outre un premier capteur 42 de mesure de la tension continue propre à circuler sur le bus continu 38 entre le convertisseur alternatif-continu et le convertisseur continu-alternatif, et un deuxième capteur 44 de mesure de la tension alternative au point intermédiaire 28.

Le filtre coupe-bande 26 est propre à atténuer la tension en chaque point intermédiaire 28 pour une bande de fréquences correspondant aux fréquences d'un intervalle cible.

L'intervalle cible est compris entre 0,6 fois la fréquence statorique $f_{stator}$ et 1,4 fois la fréquence statorique $f_{stator}$.

Dans le cas où l'installation de génération d'énergie électrique 10 est une éolienne, l'intervalle cible est de préférence compris entre 0,7 fois la fréquence statorique $f_{stator}$ et 1,3 fois la fréquence statorique $f_{stator}$.

Dans le cas où l'installation de génération d'énergie électrique 10 est une installation hydroélectrique, l'intervalle cible est, par exemple, compris entre 0,9 fois la fréquence statorique $f_{stator}$ et 1,1 fois la fréquence statorique $f_{stator}$, de préférence compris entre 0,95 fois la fréquence statorique $f_{stator}$ et 1,05 fois la fréquence statorique $f_{stator}$.

La bande de fréquences du filtre coupe-bande 26 présente une fréquence de coupure inférieure sensiblement égale à la borne inférieure de l'intervalle cible et une fréquence de coupure supérieure sensiblement égale à la borne supérieure de l'intervalle cible.

Autrement dit, la fréquence de coupure inférieure de la bande de fréquences est égale à 0,6 fois la fréquence statorique $f_{stator}$, de préférence égale à 0,7 fois la fréquence statorique $f_{stator}$ dans le cas d'une éolienne. La fréquence de coupure inférieure est égale à 0,9 fois la fréquence statorique $f_{stator}$, de préférence égale 0,95 fois la fréquence statorique $f_{stator}$ dans le cas d'une installation hydroélectrique.

La fréquence de coupure supérieure de la bande de fréquences est égale à 1,4 fois la fréquence statorique $f_{stator}$, de préférence égale à 1,3 fois la fréquence statorique $f_{stator}$ dans le cas d'une éolienne. La fréquence de coupure supérieure est égale à 1,1 fois la fréquence statorique $f_{stator}$, de préférence égale 1,05 fois la fréquence statorique $f_{stator}$ dans le cas d'une installation hydroélectrique.

Le filtre coupe-bande 26 est, par exemple, un filtre du deuxième ordre.

Le filtre coupe-bande 26 est un filtre passif, et comporte plusieurs branches 45 connectées entre les points intermédiaires 28. Chaque branche 45 comporte une bobine électromagnétique 46 et un condensateur 48 connectés en série. Chaque branche 45 comporte une résistance 50 connectée en parallèle de la bobine électromagnétique 46. En variante, les branches du filtre ne comportent pas de résistance connectée en parallèle de la bobine électromagnétique.

Dans l'exemple de réalisation de la figure 1, le filtre coupe-bande 26 est connecté en triangle, et comporte deux branches 45, chacune étant connectée entre deux points intermédiaires 28 successifs.

En variante, le filtre coupe-bande 26 est connecté en étoile, et comporte trois branches 45, chacune étant connectée entre un point intermédiaire 28 respectif et un point neutre.

Le convertisseur alternatif-continu 34, visible sur la figure 1, comporte une borne d'entrée, non représentée, pour chaque phase du courant alternatif fourni par le réseau 12, ainsi que deux bornes de sortie et un point milieu de sortie, non représentés. Le convertisseur alternatif-continu 34 est, par exemple, un convertisseur triphasé, et comporte alors trois bornes d'entrée.

Le convertisseur alternatif-continu 34 présente, par exemple, une topologie connue du type clampée par le neutre, également appelée topologie NPC (de l'anglais Neutral Point Clamped).

En variante, le convertisseur alternatif-continu 34 présente une topologie du type pilotée par le neutre, également appelée topologie NPP (de l'anglais Neutral Point Piloted). Le convertisseur alternatif-continu 34 comporte alors, pour chaque phase du courant alternatif, deux branches extrêmes et une branche intermédiaire, également appelée branche transversale. Chaque branche extrême est connectée entre une borne d'entrée respective et la borne de sortie correspondante, et comporte un interrupteur électronique commandable. La branche intermédiaire est connectée entre une borne d'entrée respective et le point milieu, et comporte deux interrupteurs connectés en anti-série.

Le convertisseur continu-alternatif 36 comporte deux bornes d'entrée et un point milieu d'entrée, non représentés, ainsi qu'une borne de sortie, non représentée, pour chaque phase du courant alternatif échangé avec le rotor 22. Le convertisseur continu-alternatif 36 comporte des interrupteurs électroniques commandables propres à convertir le courant continu fourni par le convertisseur alternatif-continu 34 en un courant alternatif délivré au rotor 22 lorsque la fréquence rotorique est positive. Inversement, lorsque la fréquence rotorique est négative, le convertisseur continu-alternatif 30 est propre à convertir le courant alternatif fourni par le rotor 22 en un courant continu délivré au convertisseur alternatif-continu 28 bidirectionnel fonctionnant alors en onduleur.

Le convertisseur continu-alternatif 36 est, par exemple, un convertisseur trois niveaux. Le convertisseur continu-alternatif 36 est, par exemple, un convertisseur clampé par le neutre, également appelé convertisseur NPC (de l'anglais Neutral Point Clamped). En variante, le convertisseur continu-alternatif 36 est un convertisseur piloté par le neutre, également appelé convertisseur NPP (de l'anglais Neutral Point Piloted).

Dans l'exemple de réalisation de la figure 1, le convertisseur continu-alternatif 36 est connecté directement au convertisseur alternatif-continu 34 via le bus de circulation du courant continu 38, en l'absence d'un hacheur de freinage (de l'anglais Dynamic Breaking Chopper, ou encore DB Chopper) connecté au bus continu 38. Le convertisseur continu-alternatif 36 est connecté directement entre le convertisseur alternatif-continu 34 et le rotor 22, en l'absence d'un dispositif de protection contre les surtensions et/ou les surintensités (de l'anglais crowbar) connecté entre les points intermédiaires 28.

Le bus continu 38 présente la tension continue Udc entre les deux bornes de sortie du convertisseur alternatif-continu 34, et également entre les deux bornes d'entrée du convertisseur continu-alternatif 36.

Le dispositif de commande 40 comprend un organe 52 de calcul de la loi de commande des interrupteurs du convertisseur continu-alternatif, un organe 54 de détermination des signaux de commande des interrupteurs du convertisseur continu-alternatif en fonction de la loi de commande, et un organe 56 d'application des signaux de commande aux interrupteurs du convertisseur continu-alternatif 36.

Le dispositif de commande 40 comporte une unité de traitement d'information, formée, par exemple, d'un processeur de données associé à une mémoire. L'organe de calcul 52, l'organe de détermination 54 et l'organe d'application 56 comportent, par exemple, respectivement un logiciel de calcul de la loi de commande, un logiciel de détermination des signaux de commande en fonction de la loi de commande, et un logiciel d'application des signaux de commande aux interrupteurs du convertisseur continu-alternatif. La mémoire est apte à stocker les logiciels de calcul de la loi de commande, de détermination des signaux de commande, et d'application des signaux de commande.

En variante, l'organe de calcul 52, l'organe de détermination 54 et l'organe d'application 56 sont réalisés sous forme de circuits logiques programmables dédiés.

Ainsi, le filtre coupe-bande 26 permet d'atténuer la tension en chaque point intermédiaire 28 pour les fréquences de l'intervalle cible autour de la fréquence statorique $f_{stator}$.

L'apparition d'un court-circuit sur le réseau alternatif 12 entraîne une augmentation significative de la tension induite au rotor 22 de la machine électrique, et la tension alternative aux bornes du convertisseur continu-alternatif 36 du côté alternatif augmente pour les fréquences voisines de la fréquence statorique $f_{stator}$. Le filtre coupe-bande 26 selon l'invention permet alors, de par l'atténuation seulement pour les fréquences de l'intervalle cible, de limiter l'augmentation de la tension continue du bus 38 lorsque la tension alternative augmente pour les fréquences de l'intervalle cible, tout en ne modifiant pas les valeurs de tension pour la fréquence rotorique $f_{rotor}$, afin de conserver le contrôle du rotor 22.

La chaîne d'entraînement selon l'invention permet alors d'éviter une détérioration du système de conversion 24 lors de l'apparition d'un court-circuit sur le réseau alternatif 12, tout en respectant les règles du réseau 12. La chaîne d'entraînement ne nécessite en outre pas l'ajout d'un dispositif additionnel actif de protection, tel qu'un hacheur de freinage connecté au bus continu 38, ou tel qu'un dispositif de protection contre les surtensions et/ou les surintensités connecté entre les points intermédiaires 28, ou encore tel que des thyristors connectés en anti-parallèle entre le réseau électrique 12 et le stator 20 de la machine.

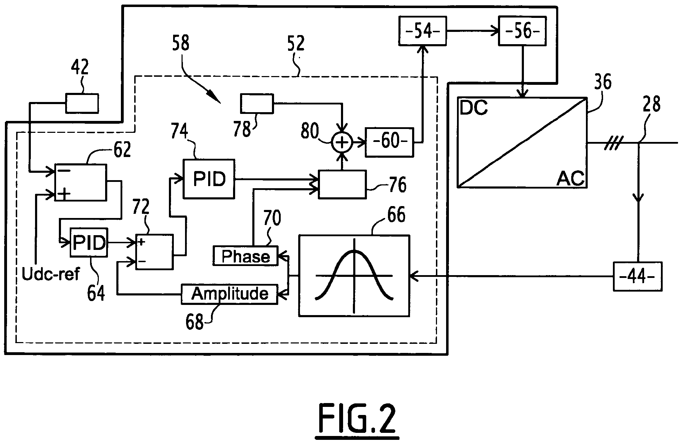

La figure 2 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, la loi de commande est, en complément du premier mode de réalisation décrit précédemment, telle que la tension alternative issue du convertisseur continu-alternatif 36 est, pour les fréquences de l'intervalle cible, asservie à une tension d'amplitude sensiblement égale à celle de la tension atténuée au point intermédiaire 28 et sensiblement en phase avec la tension issue du rotor 22.

Dans l'exemple de la réalisation de la figure 2, l'organe de calcul 52 comporte des premiers moyens 58 de calcul d'une consigne de commande des interrupteurs du convertisseur continu-alternatif et des seconds moyens 60 de calcul de la loi de commande en fonction de la consigne calculée.

Les premiers moyens de calcul 58 comportent un premier soustracteur 62 connecté au premier capteur de mesure 42 d'une part, et propre à recevoir d'autre part la valeur d'une tension continue de référence Udc-ref.

Les premiers moyens de calcul 58 comportent également un premier régulateur 64 connecté en sortie du premier soustracteur 62, un filtre passe-bande 66 relié au deuxième capteur 44, des moyens 68 de détermination de l'amplitude d'un signal et des moyens 70 de détermination de la phase du signal, les moyens de détermination de l'amplitude 68 et les moyens de détermination de la phase 70 étant connectés en sortie du filtre passe-bande 66.

Les premiers moyens de calcul 58 comportent un deuxième soustracteur 72 connecté en sortie du premier régulateur 64, d'une part, et en sortie des moyens de détermination de l'amplitude 68, d'autre part. Les premiers moyens de calcul 58 comportent également un deuxième régulateur 74 connecté en sortie du deuxième soustracteur 72, ainsi que des premiers moyens 76 de détermination de la consigne de commande pour les fréquences de l'intervalle cible, les premiers moyens de détermination de consigne 76 étant connectés aux sorties du deuxième régulateur 74 et des moyens de détermination de la phase 70.

Les premiers moyens de calcul 58 comportent également des seconds moyens 78 de détermination de la consigne de commande pour la fréquence rotorique $f_{rotor}$ et un additionneur 80 connecté aux sorties des premiers et seconds moyens de détermination de consigne 76, 78.

Le premier soustracteur 62 est propre à calculer l'erreur entre la tension continue mesurée par le premier capteur 42 et la valeur d'une tension continue de référence Udc-ref.

Le premier régulateur 64 est, par exemple, un régulateur proportionnel intégral dérivé, également appelé régulateur PID. Le premier régulateur 64 est alors propre à déterminer une correction de la tension continue en fonction de la tension continue de référence Udc-ref.

Le premier soustracteur 62 et le premier régulateur 64 forment des moyens d'asservissement de la tension continue du bus continu 38.

Le filtre passe-bande 66 est propre à sélectionner le signal de la tension alternative au point intermédiaire 28 issu du deuxième capteur 44 pour une bande de fréquences correspondant aux fréquences de l'intervalle cible, et à atténuer ledit signal de la tension alternative pour les fréquences en dehors de la bande de fréquences. La bande de fréquences du filtre passe-bande 66 présente alors une fréquence de coupure inférieure sensiblement égale à la borne inférieure de l'intervalle cible et une fréquence de coupure supérieure sensiblement égale à la borne supérieure de l'intervalle cible.

Autrement dit, la fréquence de coupure inférieure de la bande de fréquences est égale à 0,6 fois la fréquence statorique $f_{stator}$, de préférence égale à 0,7 fois la fréquence statorique $f_{stator}$ dans le cas d'une éolienne. La fréquence de coupure inférieure est égale à 0,9 fois la fréquence statorique $f_{stator}$, de préférence encore égale 0,95 fois la fréquence statorique $f_{stator}$ dans le cas d'une installation hydroélectrique.

La fréquence de coupure supérieure de la bande de fréquences est égale à 1,4 fois la fréquence statorique $f_{stator}$, de préférence égale à 1,3 fois la fréquence statorique $f_{stator}$ dans le cas d'une éolienne. La fréquence de coupure supérieure est égale à 1,1 fois la fréquence statorique $f_{stator}$, de préférence encore égale 1,05 fois la fréquence statorique $f_{stator}$ dans le cas d'une installation hydroélectrique.

Le filtre passe-bande 66 est, par exemple, un filtre du deuxième.

Les moyens de détermination de l'amplitude 68 sont propres à déterminer l'amplitude de la tension alternative au point intermédiaire 28 pour les fréquences de l'intervalle cible.

Les moyens de détermination de la phase 70 sont propres à déterminer la phase de la tension alternative au point intermédiaire 28 pour les fréquences de l'intervalle cible de sorte que le signal délivré par le convertisseur continu-alternatif correspondant à la consigne de commande soit en phase avec la tension issue du rotor 22.

Le deuxième soustracteur 72 est propre à calculer l'erreur entre l'amplitude de la tension alternative au point intermédiaire 28 obtenue par les moyens de détermination de l'amplitude 68 et la correction de tension issue du premier régulateur 64.

Le deuxième régulateur 74 est, par exemple, un régulateur proportionnel intégral dérivé, également appelé régulateur PID. Le deuxième régulateur 74 est alors propre à déterminer une correction d'amplitude de la tension alternative, en fonction de la tension alternative mesurée par le deuxième capteur 44 et de la correction de tension issue de l'asservissement de la tension du bus continu 38.

Les premiers moyens de détermination de la consigne 76 sont alors propres à déterminer la consigne de commande du convertisseur continu-alternatif pour les fréquences de l'intervalle cible en fonction de la correction d'amplitude issue du deuxième régulateur 74 et de la phase déterminée par les moyens de détermination de la phase 70 pour que la tension alternative issue du convertisseur continu-alternatif soit en phase avec la tension issue du rotor 22.

Le filtre passe-bande 66, les moyens de détermination de l'amplitude 68, les moyens de détermination de la phase 70, le deuxième soustracteur 72, le deuxième régulateur 74 et les premiers moyens de détermination de la consigne 76 forment des moyens d'asservissement en amplitude et en phase, pour les fréquences de l'intervalle cible, de la tension alternative délivrée par le convertisseur continu-alternatif 36 au point intermédiaire 28.

L'additionneur 80 est propre à additionner la consigne de commande pour les fréquences de l'intervalle cible délivrée par les premiers moyens de détermination de consigne 76 avec la consigne pour la fréquence rotorique $f_{rotor}$, afin de déterminer la consigne de commande pour l'ensemble du spectre fréquentiel délivrée aux deuxièmes moyens de calcul 60.

Les deuxièmes moyens 60 sont alors propres à calculer la loi de commande en fonction de la consigne issue de l'additionneur 80.

Le fonctionnement de ce deuxième mode de réalisation est analogue à celui du premier mode de réalisation.

Le filtre coupe-bande 26 permet d'atténuer la tension en chaque point intermédiaire 28 pour les fréquences de l'intervalle cible autour de la fréquence statorique $f_{stator}$, et la loi de commande du convertisseur continu-alternatif 36 est en outre telle que la tension alternative délivrée par le convertisseur continu-alternatif 36 est, pour les fréquences dudit intervalle cible, tout le temps d'amplitude sensiblement égale à celle de la tension atténuée au point intermédiaire 28 et sensiblement en phase avec la tension issue du rotor 22.

Le filtre coupe-bande 26 et la loi de commande du convertisseur continu-alternatif selon le deuxième mode de réalisation permettent alors de limiter l'augmentation de la tension continue du bus 38 lorsque la tension alternative augmente pour les fréquences de l'intervalle cible, suite à l'apparition d'un court-circuit sur le réseau alternatif 12. Le filtre coupe-bande 26 et la loi de commande du convertisseur continu-alternatif ne modifient pas les valeurs de tension pour les fréquences autour de la fréquence rotorique $f_{rotor}$, afin de conserver le contrôle du rotor 22.

La chaîne d'entraînement selon le deuxième mode de réalisation de l'invention permet alors d'éviter une détérioration du système de conversion 24 lors de l'apparition d'un court-circuit sur le réseau alternatif 12, tout en respectant les règles du réseau 12.

La loi de commande du convertisseur continu-alternatif selon le deuxième mode de réalisation permet en outre d'avoir, pour les fréquences de l'intervalle cible, une tension alternative délivrée par le convertisseur continu-alternatif sensiblement égale en amplitude et en phase avec la tension issue du rotor 22, de sorte que le courant aux points intermédiaires 28 est de faible intensité pour les fréquences dudit intervalle cible. Le convertisseur continu-alternatif est ainsi davantage protégé selon le deuxième mode de réalisation de l'invention.

Les autres avantages de ce deuxième mode de réalisation sont identiques à ceux du premier mode de réalisation, et ne sont donc pas décrits à nouveau.

**Revendications**

1. Chaîne d'entraînement (16) propre à être reliée à un réseau électrique alternatif (12), et comprenant :

   - une machine électrique (18) comportant un stator (20) et un rotor (22), le stator (20) étant propre à être relié électriquement au réseau alternatif (12) et présentant une fréquence statorique ($f_{stator}$),
   - un système bidirectionnel (24) de conversion d'un courant électrique alternatif en un autre courant électrique alternatif, propre à être connecté entre le réseau alternatif (12) et le rotor (22) de la machine électrique, le système bidirectionnel de conversion (24) comportant :

     + un convertisseur bidirectionnel de courant alternatif en courant continu (34) propre à être connecté au réseau alternatif (12),
     + un convertisseur bidirectionnel de courant continu en courant alternatif (36) connecté entre le convertisseur alternatif-continu (34) et le rotor (22), le convertisseur continu-alternatif (36) comportant des interrupteurs électroniques commandables propres à convertir une tension continue en une tension alternative , le convertisseur continu-alternatif (36) et le rotor (22) étant, pour chaque phase de la tension alternative, reliés entre eux en un point intermédiaire (28), et,
     + un dispositif (40) de commande des interrupteurs du convertisseur continu-alternatif (36) suivant une loi de commande,

   **caractérisée en ce qu'**elle comprend en outre un filtre coupe-bande (26) pour un intervalle cible compris entre 0,6 fois la fréquence statorique ($f_{stator}$) et 1,4 fois la fréquence statorique ($f_{stator}$), le filtre coupe-bande (26) étant connecté entre les points intermédiaires (28), et propre à atténuer la tension au point intermédiaire (28) pour les fréquences de l'intervalle cible.

2. Chaîne d'entraînement (16) selon la revendication 1, dans laquelle l'intervalle cible est compris entre 0,7 fois la fréquence statorique ($f_{stator}$) et 1,3 fois la fréquence statorique ($f_{stator}$), de préférence compris entre 0,9 fois la fréquence statorique ($f_{stator}$) et 1,1 fois la fréquence statorique ($f_{stator}$), de préférence encore compris entre 0,95 fois la fréquence statorique ($f_{stator}$) et 1,05 fois la fréquence statorique ($f_{stator}$).

3. Chaîne d'entraînement (16) selon les revendications 1 ou 2, dans laquelle le filtre coupe-bande (26) est un filtre passif.

4. Chaîne d'entraînement (16) selon la revendication 3, dans laquelle le filtre coupe-bande (26) comprend une pluralité de branches (45), chaque branche (45) comportant une bobine électromagnétique (46) et un condensateur (48) connectés en série.

5. Chaîne d'entraînement (16) selon la revendication 4, dans laquelle chaque branche (45) comporte en outre une résistance (50) connectée en parallèle de chaque bobine électromagnétique (46).

6. Chaîne d'entraînement (16) selon l'une quelconque des revendications précédentes, dans laquelle la loi de commande est telle que la tension alternative issue du convertisseur continu-alternatif (36) est, pour les fréquences de l'intervalle cible, asservie à une tension d'amplitude sensiblement égale à celle de la tension atténuée au point intermédiaire (28) et sensiblement en phase avec la tension issue du rotor (22).

7. Chaîne d'entraînement (16) selon la revendication 6, comprenant en outre un premier capteur (42) de mesure de la tension continue entre le convertisseur alternatif-continu (34) et le convertisseur continu-alternatif (36), un deuxième capteur (44) de mesure de la tension alternative atténuée au point intermédiaire (28), et le dispositif de commande (40) comprenant des moyens (66, 68, 70, 72, 74, 76) d'asservissement, pour les fréquences de l'intervalle cible, de la tension alternative issue du convertisseur continu-alternatif (36).

8. Chaîne d'entraînement (16) selon l'une quelconque des revendications précédentes, dans laquelle le convertisseur continu-alternatif (36) est connecté directement au convertisseur alternatif-continu (34) via un bus de circulation du courant continu (38), en l'absence d'un hacheur de freinage connecté au bus de circulation du courant continu (38).

9. Chaîne d'entraînement (16) selon l'une quelconque des revendications précédentes, dans laquelle le convertisseur continu-alternatif (36) est connecté directement entre le convertisseur alternatif-continu (34) et le rotor (22), en l'absence d'un dispositif de protection conte les surtensions et/ou les surintensités connecté entre les points intermédiaires (28).

10. Installation (10) de génération d'énergie électrique à destination d'un réseau électrique alternatif (12), l'installation (10) comprenant une turbine (14) et une chaîne d'entraînement (16) connectée à la turbine (14), d'une part, et propre à être reliée au réseau alternatif (12), d'autre part,
caractérisée en ce que la chaîne d'entraînement (16) est conforme à l'une quelconque des revendications précédentes, la machine électrique (18) étant un générateur connecté à la turbine (14), le stator (20) du générateur étant propre à être connecté au réseau alternatif (12).

**Patentansprüche**

1. Antriebsstrang (16), der dazu eingerichtet ist, mit einem elektrischen Wechselspannungsnetz (12) verbunden zu werden, und aufweisend:

- eine elektrische Maschine (18), aufweisend einen Stator (20) und einen Rotor (22), wobei der Stator (20) dazu eingerichtet ist, mit dem elektrischen Wechselspannungsnetz (12) verbunden zu werden und der eine Statorfrequenz ($f_{stator}$) bereitstellt,
- ein bidirektionales System (24) zur Wandlung eines elektrischen Wechselstroms in einen anderen elektrischen Wechselstrom, das dazu eingerichtet ist, zwischen das Wechselspannungsnetz (12) und den Rotor (22) der elektrischen Maschine geschaltet zu werden, wobei das bidirektionale System zur Wandlung (24) aufweist:

+ einen bidirektionalen Wandler eines Wechselstroms in einen Gleichstrom (34), der dazu eingerichtet ist, mit dem Wechselspannungsnetz (12) verbunden zu werden,
+ einen bidirektionalen Wandler eines Gleichstromes in einen Wechselstrom (36), der zwischen den Wandler von Wechselstrom in Gleichstrom (34) und den Rotor (22) geschaltet ist, wobei der Wandler von Gleichstrom in Wechselstrom (36) steuerbare elektronische Schalter aufweist, die dazu eingerichtet sind, eine Gleichspannung in eine Wechselspannung zu wandeln, wobei der Wandler von Gleichstrom in Wechselstrom (36) und der Rotor (22) für jede Phase der Wechselspannung miteinander an einem Zwischenpunkt (28) verbunden sind, und
+ eine Einrichtung (40) zur Steuerung der Schalter des Wandlers von Gleichstrom in Wechselstrom (36) folgend einem Steuergesetz,

**dadurch gekennzeichnet, dass** sie außerdem ein Bandsperrfilter (26) für ein Zielintervall enthaltend zwischen dem 0, 6-fachen der Statorfrequenz ($f_{Stator}$) und dem 1,4-fachen der Statorfrequenz ($f_{Stator}$) aufweist, wobei das Bandsperrfilter (26) zwischen den Zwischenpunkten (28) angeordnet ist und dazu eingerichtet ist, die Spannung am Zwischenpunkt (28) für die Frequenzen des Zielintervalls zu schwächen.

2. Antriebsstrang (16) nach Anspruch 1, bei dem im Zielintervall zwischen dem 0,7-fachen der Statorfrequenz ($f_{Stator}$) und dem 1, 3-fachen der Statorfrequenz ($f_{Stator}$) enthalten ist, vorzugsweise zwischen dem 0,9-fachen der Statorfrequenz ($f_{Stator}$) und dem 1,1-fachen der Statorfrequenz ($f_{Stator}$) enthalten ist, weiter vorzugsweise zwischen dem 0,95-fachen der Statorfrequenz ($f_{Stator}$) und dem 1,05-fachen der Statorfrequenz ($f_{Stator}$) enthalten ist.

3. Antriebsstrang (16) nach den Ansprüchen 1 oder 2, bei dem das Bandsperrfilter (26) ein passives Filter ist.

4. Antriebsstrang (16) nach Anspruch 3, bei dem das Bandsperrfilter (26) eine Mehrzahl von Zweigen (45) aufweist, wobei jeder Zweig (45) eine elektromagnetische Spule (46) und einen Kondensator (48) aufweist, die in Reihe geschaltet sind.

**5.** Antriebsstrang (16) nach Anspruch 4, bei dem jeder Zweig (45) außerdem einen Widerstand (50) aufweist, der parallel zu jeder elektromagnetischen Spule (46) geschaltet ist.

**6.** Antriebsstrang (16) nach irgendeinem der vorhergehenden Ansprüche, bei dem das Steuergesetz derart ist, dass die vom Wandler von Gleichstrom in Wechselstrom (36) abgegebene Wechselspannung für die Frequenzen des Zielintervalls auf eine Spannung mit einer Amplitude gesteuert wird, die im Wesentlichen gleich der der abgeschwächten Spannung am Zwischenpunkt (28) ist und im Wesentlichen in Phase ist mit der vom Rotor (22) abgegebenen Spannung.

**7.** Antriebsstrang (16) nach Anspruch 6, aufweisend außerdem einen ersten Sensor (42) zur Messung der Gleichspannung zwischen dem Wandler von Wechselstrom in Gleichstrom (34) und dem Wandler von Gleichstrom in Wechselstrom (36), einen zweiten Sensor (44) zur Messung der abgeschwächten Wechselspannung am Zwischenpunkt (28), und wobei die Steuereinrichtung (40) außerdem Mittel (66, 68, 70, 72, 74, 76) zur Steuerung der von dem Wandler von Gleichstrom in Wechselstrom (36) abgegebenen Wechselspannung für die Frequenzen des Zielintervalls aufweist.

**8.** Antriebsstrang (16) nach irgendeinem der vorhergehenden Ansprüche, bei dem der Wandler von Gleichstrom in Wechselstrom (36) unmittelbar mit dem Wandler von Wechselstrom in Gleichstrom (34) mittels eines Gleichsstromzwischenkreises (38) in Abwesenheit von einem mit dem Gleichstromzwischenkreis (38) verbundenen Bremschopper.

**9.** Antriebsstrang (16) nach irgendeinem der vorhergehenden Ansprüche, bei dem der Wandler von Gleichstrom in Wechselstrom (36) unmittelbar zwischen den Wandler von Wechselstrom in Gleichstrom (34) und den Rotor (22) geschaltet ist unter Abwesenheit einer zwischen die Zwischenpunkte (28) geschalteten Schutzeinrichtung gegen Überspannungen und/oder Überströme.

**10.** Vorrichtung (10) zur Erzeugung von elektrischer Energie für ein elektrisches Wechselspannungsnetz (12), wobei die Vorrichtung (10) eine Turbine (14) und einen Antriebsstrang (16) aufweist, der einerseits mit der Turbine (14) verbunden ist und dazu eingerichtet ist, andererseits mit dem Wechselspannungsnetz (12) verbunden zu werden, **dadurch gekennzeichnet, dass** der Antriebsstrang (16) irgendeinem der vorhergehenden Ansprüche entspricht, wobei die elektrische Maschine (18) ein Generator ist, der mit der Turbine (14) verbunden ist, wobei der Stator (20) des Generators dazu eingerichtet ist, mit dem Wechselspannungsnetz (12) verbunden zu werden.

**Claims**

**1.** Drive train (16) able to be connected to an alternating current electrical network (12), comprising:

- an electrical machine (18) comprising a stator (20) and a rotor (22), the stator (20) being able to be connected electrically to the alternating current network (12) and having a stator frequency ($f_{stator}$),
- a bidirectional system (24) for converting an alternating electrical current into another alternating electrical current, able to be connected between the alternating current network (12) and the rotor (22) of the electrical machine, the bidirectional conversion system (24) comprising:

    o a bidirectional converter (34) for converting alternating current into direct current and able to be connected to the alternating current network (12),
    o a bidirectional inverter (36) for converting direct current into alternating current and connected between the ac/dc converter (34) and the rotor (22), the dc/ac inverter (36) comprising controllable electronic switches suitable for converting a direct current voltage into an alternating current voltage, the dc/ac inverter (36) and the rotor (22) being, for each phase of the alternating current voltage, connected between them and an intermediate point (28), and
    o a device (40) for controlling the switches of the dc/ac inverter (36) following a control law,

**characterized in that** it also comprises a band-stop filter (26) for a target interval between 0.6 times the stator frequency ($f_{stator}$) and 1.4 times the stator frequency ($f_{stator}$), the band-stop filter (26) being connected between the intermediate points (28) and able to attenuate the voltage at the intermediate point (28) for the frequencies of the target interval.

2. Drive train (16) according to claim 1, wherein the target interval lies between 0.7 times the stator frequency ($f_{stator}$) and 1.3 times the stator frequency ($f_{stator}$), preferably between 0.9 times the stator frequency ($f_{stator}$) and 1.1 times the stator frequency ($f_{stator}$), further preferably between 0.95 times the stator frequency ($f_{stator}$) and 1.05 times the stator frequency ($f_{stator}$).

3. Drive train (16) according to claim 1 or 2, wherein the band-stop filter (26) is a passive filter.

4. Drive train (16) according to claim 3, wherein the band-stop filter (26) comprises a plurality of branches (45), each branch (45) comprising an electromagnetic coil (46) and a condenser (48) connected in series.

5. Drive train (16) according to claim 4, wherein each branch (45) also comprises a resistor (50) connected in parallel with each electromagnetic coil (46).

6. Drive train (16) according to any of the preceding claims, wherein the control law is such that the alternating current voltage from the dc/ac inverter (36) is, for the frequencies of the target interval, subjected to a voltage of amplitude substantially equal to that of the attenuated voltage at the intermediate point (28) and substantially in phase with the voltage from the rotor (22).

7. Drive train (16) according to claim 6, also comprising a first sensor (42) for measuring the direct current voltage between the ac/dc converter (34) and the dc/ac inverter (36), a second sensor (44) for measuring the alternating current voltage attenuated at the intermediate point (28), and the control device (40) comprising means (66, 68, 70, 72, 74, 76) for controlling, for the frequencies of the target interval, the alternating current voltage from the dc/ac inverter (36).

8. Drive train (16) according to any of the preceding claims, wherein the dc/ac inverter (36) is connected directly to the ac/dc converter (34) via a direct current circulation bus (38), in the absence of a braking chopper connected to the direct current circulation bus (38).

9. Drive train (16) according to any of the preceding claims, wherein the dc/ac inverter (36) is connected directly between the ac/dc converter (34) and the rotor (22), in the absence of a protection device against surge voltage and/or surge current connected between the intermediate points (28).

10. Installation (10) for generating electrical energy intended for an alternating current electrical network (12), the installation (10) comprising a turbine (14) and a drive train (16) connected to the turbine (4) firstly, and able to be connected to the alternating current network (12) secondly,
**characterized in that** the drive train (16) complies with any of the preceding claims, the electrical machine (18) being a generator connected to the turbine (14), the stator (20) of the generator being able to be connected to the alternating current network (12).

**FIG.1**

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070177314 A